# EUROPÄISCHE PATENTANMELDUNG

(11) **EP 0 762 164 A2**
(43) Veröffentlichungstag der Anmeldung: **12.03.1997**
(21) Anmeldenummer: 96114338.5
(22) Anmeldetag: 06.09.1996
(51) Int. Cl.: G02B 6/36, G02B 6/38

(54) **Befestigungsvorrichtung für Lichtwellenleiter**

(30) Priorität: 08.09.1995 DE 19533296
(71) Anmelder: SIEMENS AKTIENGESELLSCHAFT, 80333 München (DE)
(72) Erfinder: Birnbaum, Roland, Dipl.-Ing., 73433 Aalen (DE)

(57) **Zusammenfassung**

Die Vorrichtung, die zur Befestigung und Zugentlastung zweier Ein-Moden-Fasern (1) jeweils durch zwei unabhängig voneinander wirkende Haltekomponenten dient, umfaßt einen im wesentlichen quaderförmigen Grundkörper (4) aus Kunststoffmaterial, der zwei getrennte, in Längsrichtung von Stirnfläche zu Stirnfläche verlaufende Bohrungen (7, 8) aufweist, in die jeweils eine Faser (1) einschiebbar ist und der wenigstens über einen Teil seiner Länge von den Bohrungen (7, 8) in Querrichtung bis zur jeweiligen Längsseite des Quaders (4) hin geschlitzt ist. Dabei sind die Schlitze (9, 10) mit Klemmitteln (2) so zusammendrückbar, daß die Fasern (1) jeweils durch einen Reibschluß klemmend gehalten sind, während die Fasern (1) mit einer parallel zu den Stirnwänden in den Grundkörper einschiebbaren Halteplatte (5) zusätzlich jeweils durch einen Formschluß klemmend gehalten sind.

## Beschreibung

Die Erfindung betrifft eine Befestigungsvorrichtung für Lichtwellenleiter.

Die Befestigung und Zugentlastung von Signal- Übertragungskabeln ist ein in immer neuen technischen Zusammenhängen auftretendes Problem. Hinsichtlich der Befestigung von Glas- oder Kunststoffaserkabeln stellen sich insofern besondere Probleme, als bei System-Komponenten für die Lichtwellenleiter-Technik ganz allgemein Genauigkeitsanforderungen im Mikrometerbereich für viele Einzelteile und für das Justieren einzelner Elemente zueinander einzuhalten sind.

Aus der EP 0 503 614 A1 ist bereits eine Zugentlastungsvorrichtung insbesondere für Glasfaserkabel bekannt, die einen Stegteil umfaßt, welcher eine Mehrzahl von sich nach oben hin erweiternden Schlitzen aufweist, die zur klemmenden, zugentlastenden Aufnahme des Kabels dienen. Diese Vorrichtung ist insbesondere für den Einsatz an einem Montageort vorgesehen, an dem Kabelenden nur zeitweise befestigt und gesichert und wieder gelöst werden sollen. Eine dauerhafte Befestigung von Lichtleitern in einem optischen Steckverbinder ist beispielsweise aus der EP 0 484 996 A1 bekannt. Dort ist ein Steckerteil mit einem in Steckrichtung spitz zulaufendem Keilstück beschrieben, das sich beim Stecken zwischen zwei im anderen Steckerteil endenden Lichtleiter schiebt und diese im Steckzustand klemmend gegen Wände dieses Steckerteiles drückt. Aus der US 4,167,303 ist außerdem ein optischer Steckverbinder bekannt, bei dem ein Steckergehäuse Bohrungen aufweist, die einzelne Lichtwellenleiterkabel aufnehmen. Die eigentliche Befestigung geschieht dort mittels über die Lichtleiterenden geschobenen Hülsen und jeweils einem über jede Hülse geschobenen Crimpring, der die als Zwinge dienende Hülse jeweils radial zusammendrückt.

Diese bestehenden Lösungen sind für manche Anwendungen, in denen eine nahezu 100%-ige Sicherheit und Beständigkeit der Befestigung gefordert wird, noch nicht zufriedenstellend. Dies liegt vor allem daran, daß häufig Kunststoffteile verwendet werden, deren Fertigung mit Toleranzen behaftet ist und deren Material im Laufe der Zeit arbeitet. Die bekannten Befestigungsvorrichtungen sind außerdem nicht für den Einsatz in modularen Stecksystemen geeignet.

Der vorliegenden Erfindung liegt die Aufgabe zugrunde, eine Befestigung von Lichtwellenleitern (Simplex- und Duplex-Leitungen) zu schaffen, die auch bei relativ hohen Auszugskräften eine besonders hohe Sicherheit und Dauerhaftigkeit gewährleistet. Darüberhinaus soll die Befestigung leicht montierbar und konfektionierbar und in einen modular aufgebauten Steckverbinder integrierbar sein.

Diese Aufgabe wird gelöst durch eine Befestigungsvorrichtung für Lichtwellenleiter
- mit einem im wesentlichen quaderförmigen Grundkörper aus Kunststoffmaterial,
- der zwei getrennte, in Längsrichtung von Stirnfläche zu Stirnfläche verlaufende Bohrungen aufweist, in die jeweils eine Ein-Moden-Faser einschiebbar ist,
- und der wenigstens über einen Teil seiner Länge von den Bohrungen in Querrichtung bis zur jeweiligen Längsseite des Quaders hin geschlitzt ist,
- mit Klemmitteln, durch die die Schlitze so zusammendrückbar sind, daß die Fasern jeweils durch einen Reibschluß klemmend gehalten sind,
- und mit einer parallel zu den Stirnwänden in den Grundkörper einschiebbaren Halteplatte, durch die die Fasern zusätzlich jeweils durch einen Formschluß klemmend gehalten sind.

Vorteilhafte Ausgestaltungen des Gegenstandes des Anspruchs 1 sind in den Unteransprüchen angegeben.

Die Erfindung wird anhand eines in den Figuren der Zeichnung dargestellten Ausführungsbeispiels im folgenden näher beschrieben. Es zeigen:
Figur 1 eine erfindungsgemäße Befestigungsvorrichtung in Explosionsdarstellung,
Figur 2 einen Querschnitt durch eine Befestigungsvorrichtung gemäß Figur 1, jedoch im montierten Zustand,
Figur 3 einen Längsschnitt durch die Befestigungsvorrichtung gemäß Figur 2.

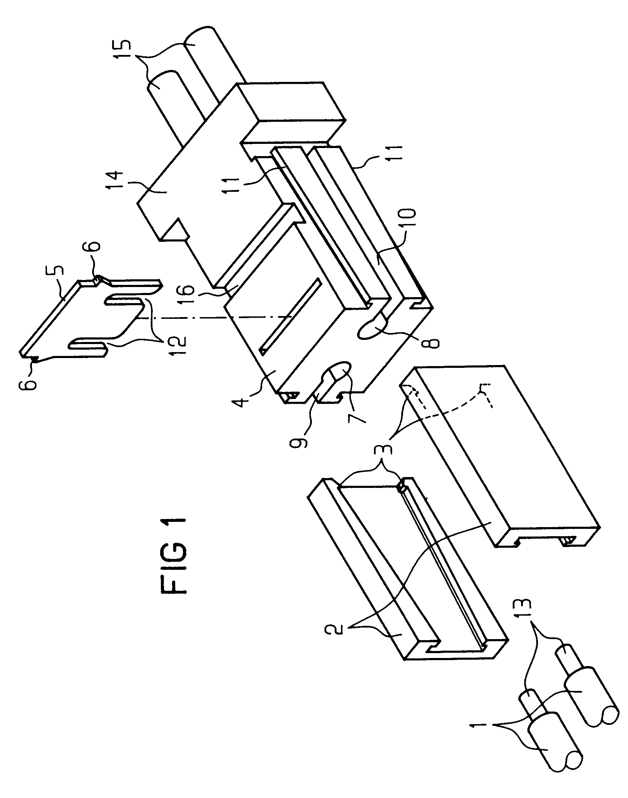

In Figur 1 ist ein durch Kunststoffspritzverfahren herstellbarer, im wesentlichen quaderförmiger Grundkörper 4 dargestellt. Erkennbar sind die beiden Bohrungen 7 und 8, in die die Ein-Moden-Fasern 1 einzeln eingeführt und bis zur einem Anschlag im Stirnbereich 14 vorgeschoben werden. Es können sowohl Glas- wie die weniger aufwendigen Kunststoff-Lichtwellenleiter verwendet werden. Duplex-Leitungen werden vor dem Einschieben in zwei "Einzelleiter" aufgetrennt. Bevor der Grundkörper hier mit ein oder zwei Fasern 1 bestückt wird, wird mit einem Abisolierwerkzeug der Mantel der Fasern auf einer bestimmten Länge entfernt.

Wie insbesondere aus Figur 1 hervorgeht, werden die Lichtwellenleiter 1 durch zwei unabhängig voneinander wirkende Haltekomponenten gesichert. Diese beiden Komponenten der Faserbefestigung sind einmal durch einen Formschluß mittels der Halteplatte 5 und andererseits durch einen Reibschluß, der durch den im hinteren Bereich geschlitzten Grundkörper 4 und Klemmittel 2 bewirkt ist, realisiert worden. Die Klemmittel können insbesondere, wie dargestellt, als Klemmplatten 2 ausgebildet sein, die auf keilförmige, an den Seitenflächen des Grundkörper 4 angeordnete Auflaufflächen 11 aufschiebbar sind. Wie erkennbar, sind auch die Innenseiten der Klemmplatten 2 mit einer entsprechend umgekehrten Keilform ausgestaltet worden. Die quer von oben in den Grundkörper 4 einschiebbare Halteplatte 5 kann beispielsweise, wie dargestellt, zwei in Einschiebrichtung offene, U-förmige Klemmschlitze 12 aufweisen. Es kommt allerdings anders als bei einer der bekannten Schneid-Klemm-Verbindungen nicht zu einem Durchschneiden der Isolation, sondern diese wird in den Kelmmschlitzen 12 nur eingedrückt, bzw. nur eingeklemmt. Die Halteplatte 5 könnte im Grundkörper 4 auch vorverrastet sein, so daß kein zusätzliches Handling eines Einzelteils erforderlich ist.

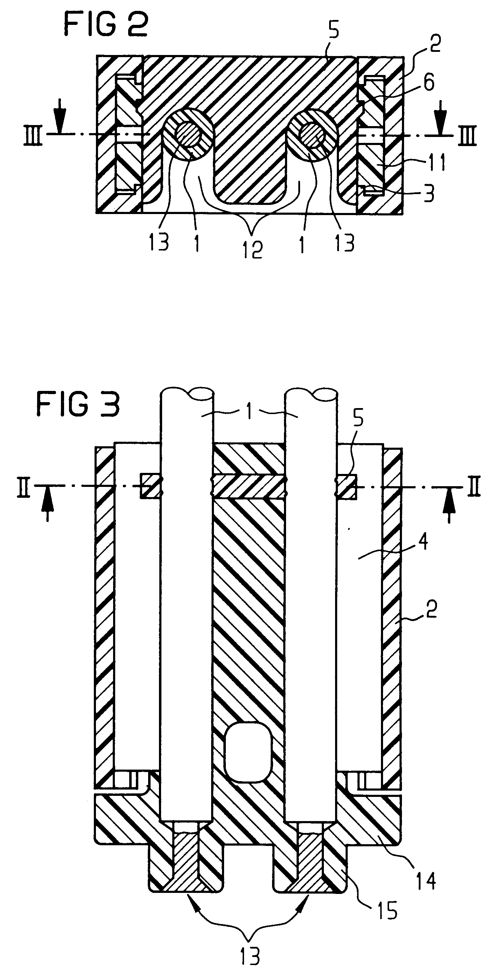

Ein Lösen der Halteplatte 5 wird durch die Rasthaken 6 verhindert, vgl. auch Figur 2. Ebenso können Ausnehmungen in der Halteplatte 5 und entsprechende Rastmittel im Grundkörper 4 vorgesehen sein. Der Reibschluß wird durch die Rasthaken 3 aufrecht erhalten. Die erfindungsgemäße Befestigungsvorrichtung kann ohne weiteres so modifiziert werden, daß ein bewußtes nachträgliches Lösen der beiden Haltekomponenten möglich ist. Beispielsweise kann die Halteplatte 5 im Bereich ihrer Oberkante mit einem Ansatz versehen werden, der zum Wiederherausziehen geeignet ist, wenn gleichzeitig Mittel vorgesehen werden, um beispielsweise die Rasthaken 6 vor dem Herausziehen ausreichend zurückzudrücken.

In Figur 3 ist erkennbar, daß die Faserenden 13 in einem Stirnbereich 14 des Grundkörpers 4 angeschlagen sind und daß in Verlängerung jeder Bohrung 7 und 8 axial aus diesem Stirnbereich 14 herausstehende Zentrierhülsen 15 vorgesehen sind. Nach dem Konfektionieren der Lichtwellenleiter in der Befestigungsvorrichtung, also nach dem Einrasten der Klemmplatten 2 und nachdem die Halteplatte 5 bündig eingedrückt ist, kann die Befestigungsvorrichtung auf einem dafür vorgesehenen an sich bekannten Reiter gelegt und gegen eine beheizbare Platte gedrückt werden, wodurch sogenannte "warmgepreßte" Stirnflächen der Faserenden 13 entstehen. Ein einfaches Abschneiden der Faserenden 13 ist aber auch denkbar.

Die beschriebene Befestigungsvorrichtung ist besonders geeignet, in wenigstens ein von zwei zusammenfügbaren Steckergehäusen integriert zu werden. Eine besonders vorteilhafte Anwendung ist ein Steckverbinder, der elektrische und Lichtwellenleiter-Steckverbindungen umfaßt und bei dem die erfindungsgemäße Befestigungsvorrichtung als mittels Führungsnuten 16 in ein Buchsensteckergehäuse einschiebbares Lichtleitermodul dient, wobei in das Buchsensteckergehäuse außerdem Buchsenmodule einschiebbar sind, und wobei die Module in ihren Außenabmessungen alle ein gleiches Teilungsmaß aufweisen. Ein derartiger Steckverbinder ist in der am gleichen Tag eingereichten deutschen Patentanmeldung mit dem Aktenzeichen Nr. ..... beschrieben , die hiermit in die Offenbarung einbezogen wird. Dort ist insbesondere auch ein im Wannenboden des Stiftsteckergehäuses des hybriden Steckverbinders integriertes Lichtleitergegenmodul beschrieben, das an seiner Oberseite Zentrierbohrungen aufweist, in die die Zentrierhülsen 15 einer im Buchsensteckergehäuse aufgenommenen Befestigungsvorrichtung beim Zusammenstecken der Steckergehäuse eingreifen können.

## Patentansprüche

1. Befestigungsvorrichtung für Lichtwellenleiter
• mit einem im wesentlichen quaderförmigen Grundkörper (4) aus Kunststoffmaterial,
• der zwei getrennte, in Längsrichtung von Stirnfläche zu Stirnfläche verlaufende Bohrungen (7, 8) aufweist, in die jeweils eine Ein-Moden-Faser (1) einschiebbar ist,
• und der wenigstens über einen Teil seiner Länge von den Bohrungen (7, 8) in Querrichtung bis zur jeweiligen Längsseite des Quaders (4) hin geschlitzt ist,
• mit Klemmitteln (2), durch die die Schlitze (9, 10) so zusammendrückbar sind, daß die Fasern (1) jeweils durch einen Reibschluß klemmend gehalten sind,
• und mit einer parallel zu den Stirnwänden in den Grundkörper (4) einschiebbaren Halteplatte 5, durch die die Fasern (1) zusätzlich jeweils durch einen Formschluß klemmend gehalten sind.

2. Befestigungsvorrichtung nach Anspruch 1,
**dadurch gekennzeichnet,**
daß die Klemmittel (2) als Klemmplatten (2) ausgebildet sind, die auf keilförmige, an den Seitenflächen des Grundkörpers (4) angeordnete Auflaufflächen (11) aufschiebbar sind.

3. Befestigungsvorrichtung nach Anspruch 1 oder 2,
**dadurch gekennzeichnet,**
daß die Halteplatte (5) zwei in Einschiebrichtung offene, U-förmige Klemmschlitze (12) aufweist.

4. Befestigungsvorrichtung nach einem der Ansprüche 1 bis 3,
**dadurch gekennzeichnet,**
daß die Klemmittel (2), die Halteplatte (5) und der Grundkörper (4) Rastmittel (3, 6) aufweisen, durch die der Reib- und der Formschluß aufrecht erhaltbar sind.

5. Befestigungsvorrichtung nach einem der Ansprüche 1 bis 4,
**dadurch gekennzeichnet,**
daß die Faserenden (13) in einem Stirnbereich (14) des Grundkörpers (4) angeschlagen sind und daß in Verlängerung jeder Bohrung (7, 8) axial aus diesem Stirnbereich (14) herausstehende Zentrierhülsen (15) vorgesehen sind.

6. Steckverbinder, der mindestens eine Lichtwellenleiter-Steckverbindung umfaßt, mit zwei zusammenfügbaren Steckergehäusen, wobei in wenigstens einem der Steckergehäuse eine Befestigungsvorrichtung nach einem der Ansprüche 1 bis 5 integriert ist.

7. Steckverbinder nach Anspruch 6, der elektrische und Lichtwellenleiter-Steckverbindungen umfaßt, und bei dem die Befestigungsvorrichtung nach einem der Ansprüche 1 bis 5 als mittels an der Befestigungsvorrichtung angeordneten Führungsnuten (16) in ein Buchsensteckergehäuse einschiebbares Lichtleitermodul dient, wobei in das Buchsensteckergehäuse außerdem Buchsenmodule einschiebbar sind, und wobei die Module in ihren Außenabmessungen alle ein gleiches Teilungsmaß aufweisen.
